# EUROPÄISCHE PATENTANMELDUNG

(11) **EP 1 122 147 A2**
(43) Veröffentlichungstag der Anmeldung: **08.08.2001**
(21) Anmeldenummer: 01102096.3
(22) Anmeldetag: 31.01.2001
(51) Int. Cl.: B62B 1/14

(54) **Transportroller**

(30) Priorität: 05.02.2000 DE 10005235
(71) Anmelder: LEIFHEIT Aktiengesellschaft, D-56377 Nassau (DE)
(72) Erfinder: Fischer, Klaus-Jürgen, 56379 Holzappel (DE)

(57) **Zusammenfassung**

Transportroller, insbesondere Einkaufsroller, mit einem Klappbügel 11, der zur Vergrößerung der Auflage 5 zum Transport von zum Beispiel Getränkekisten vorklappbar ist und der im Normalzustand den Behälter 2 unterstützt (Figur 1).

## Beschreibung

Die Erfindung bezieht sich auf einen Transportroller gemäß dem Oberbegriff des Anspruchs 1.

Derartige Transportroller, wie sie zum Beispiel aus der Deutschen Patentschrift 2851744 bekannt sind, sind dazu ausgelegt, einen Behälter aufzunehmen, der zum Transport von Einkaufsgut dient. Häufig ist es aber auch erwünscht, mit einem derartigen Transportroller andere Transportgüter, wie zum Beispiel Getränkekisten oder Koffer, zu befördern, wozu es gemäß der genannten Patentschrift bekannt ist, einen aus einer Ruhestellung nach vorne klappbaren Bügel zur Erweiterung der Aufnahmekapazität vorzusehen. Dieser Bügel ist aber in Ruhestellung häufig ein Hindernis und stört das Gesamtaussehen des Transportrollers.

Aufgabe der Erfindung ist es, einen Klappbügel zur Vergrößerung der Aufnahmekapazität eines Transportrollers zu schaffen, der sich harmonisch in die Konstruktion des Transportrollers einfügt und auch im Ruhezustand eine tragende Funktion erfüllt.

Diese Aufgabe wird mit den kennzeichnenden Merkmalen des Anspruchs 1 gelöst. Durch die Anlenkung des Klappbügels an der Außenseite der Bodenabstützung und der u-förmigen Führung nach Innen, ist es möglich, im Ruhezustand Stützkräfte aufzunehmen und somit die Funktion einer zusätzlichen Behälteraufnahme mitzuübernehmen. Durch Vorklappen des Bügels stützt sich dieser mit seiner anderen Seite durch Schwenken um 90° an der Auflage ab und kommt mit seinem Tragschenkel zur Unterstützung von größerem Transportgut wie Flaschenkisten außerhalb der Auflage in Position.

Ein Ausführungsbeispiel der Erfindung wird im folgenden anhand der Zeichnungen näher erläutert. Es zeigen:
- Figur 1: eine perspektivische Ansicht eines Transportrollers mit dem Klappbügel in Ruhestellung,
- Figur 2: eine perspektivische Ansicht mit dem Klappbügel in Transportstellung für zusätzliches Transportgut,

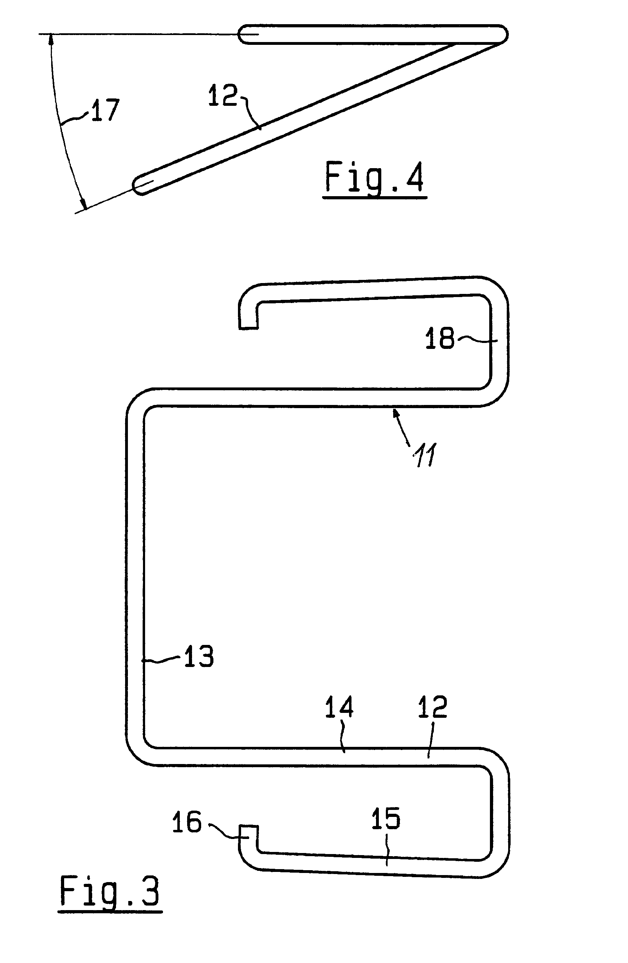

- Figur 3: eine Frontansicht des Klappbügels und
- Figur 4: eine Seitenansicht des Klappbügels.

Der Transportroller besteht im wesentlichen aus einem Fahrgestell 1 und aus einem daran lösbar befestigten Behälter 2, der nur gestrichelt dargestellt ist.

Das Fahrgestell 1 setzt sich aus einem senkrechten Rahmen 3 mit Griffbügel 4, einer Auflage 5 für den Behälter 2 und einer die Räder 6 tragenden Achse 7 zusammen. Die Achse 7 verbindet zusätzlich den Rahmen 3 mit der Auflage 5.

Die Auflage 5 ist aus einem Rohr zu zwei Holmen 8, auf denen die Tasche 2 aufliegt, gebogen, die zu einem U rechtwinklig nach unten gebogen sind und so die Bodenabstützung 9 bilden.

An der Bodenabstützung 9 ist über zwei Bohrungen 10 von außen der Klappbügel 11 eingehängt.

Der Klappbügel 11 ist aus einem Draht einstückig gebogen und bildet zwei u-förmige Stützschenkel 12, die über einen Tragschenkel 13 verbunden sind.

Der U-förmige Stützschenkel 12 besteht aus einem inneren Glied 14 und einem äußeren Glied 15 mit einer rechtwinkligen Abkröpfung 16, die in die Bohrung 10 eingreift. Das innere Glied 14 und das äußere Glied 15 stehen in einem Winkel 17 von ca. 20 bis 25° zueinander.

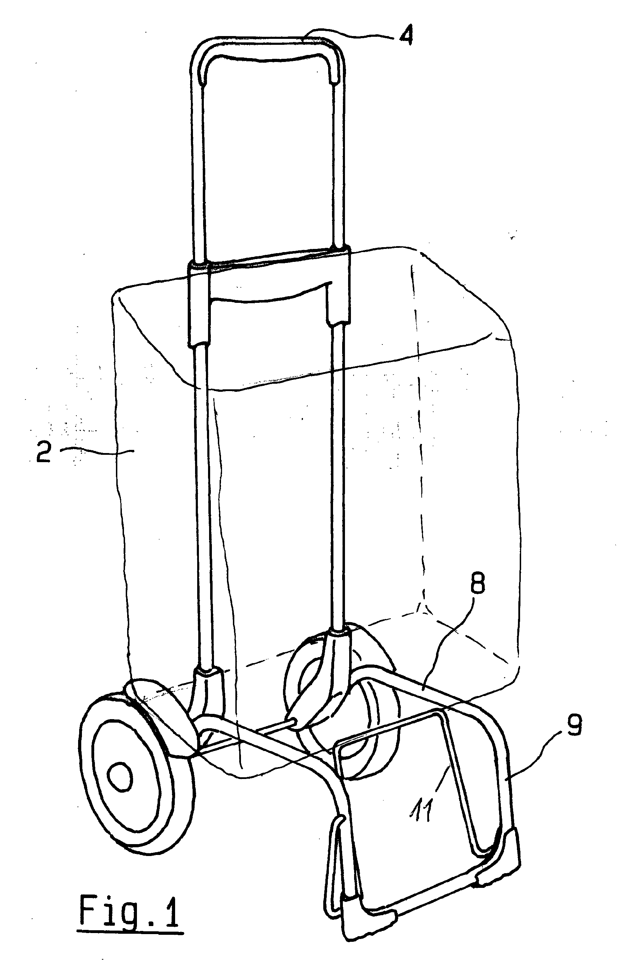

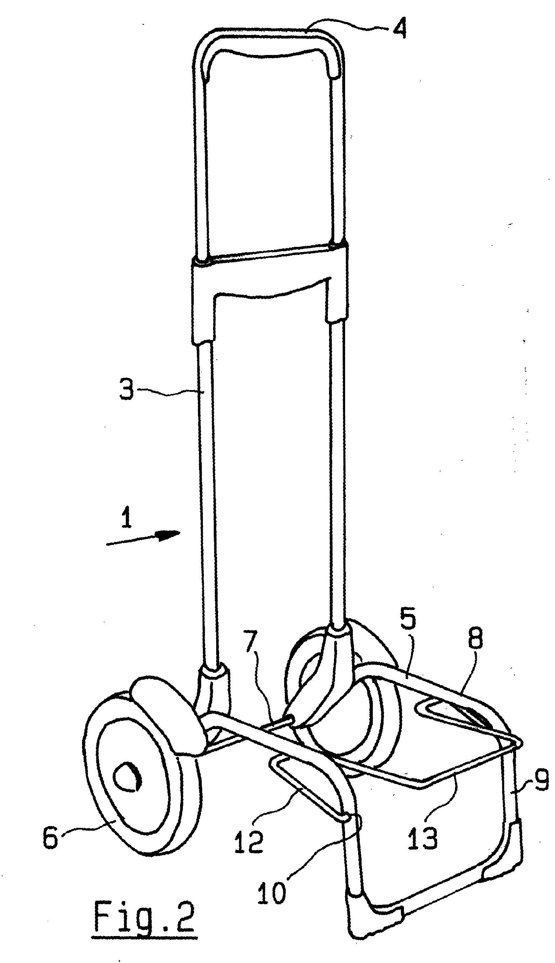

Über einen Abstützsteg 18 ist das innere Glied 14 mit dem äußeren Glied 15 verbunden, wobei sich dieser Abstützsteg 18 in der in Figur 1 dargestellten Stellung von innen an der Bodenabstützung 9 und in der in Figur 2 dargestellten Stellung von unten an den Holmen 8 abstützt. Somit unterstützt der Klappbügel 11 mit seinem Tragschenkel 13 in der Stellung nach Figur 1 den Behälter 2 und dient in der in Figur 2 dargestellten Stellung als vergrößerte Auflage für zum Beispiel eine Getränkekiste.

## Patentansprüche

1. Transportroller, insbesondere Einkaufsroller, bestehend aus einem Fahrgestell und einem daran lösbar befestigten Behälter (2), wobei sich das Fahrgestell aus einem von Rädern (6) getragenen und im wesentlichen senkrecht angeordneten Rahmen (3) und einer an dessen unterem Ende vorgesehenen, nach vorne gerichteten Auflage (5) für den Behälter (2), die durch einen Klappbügel (11) für anderes Transportgut vergrößerbar ist, zusammensetzt, dadurch gekennzeichnet, daß die Auflage (5) zweiholmig ausgeführt und diese vorne zu einer Bodenabstützung (9) nach unten abgebogen ist, wobei der Klappbügel (11) sich in zwei U-förmigen Stützschenkeln (12) und einem diese verbindenden Tragschenkel (13) aufteilt, und daß der Klappbügel (11) jeweils über ein abgewinkeltes Ende (16) des Stützschenkels (12) von außen an der Bodenabstützung (9) drehbar gelagert ist.

2. Transportroller nach Anspruch 1, dadurch gekennzeichnet, daß der U-förmige Stützschenkel (12) in Ruhestellung mit seinem äußeren Glied (15) mit dem abgewinkelten Ende (16) entlang der Bodenabstützung (9) verläuft und das innere Glied (14) in einem Winkel (17) von 10 bis 25° angeordnet ist, so daß der Tragschenkel (13) im vorderen Drittel die Auflage (5) innen zur Unterstützung des Behälters (2) verbindet.
